# EUROPEAN PATENT APPLICATION

(11) **EP 2 323 062 A1**
(43) Date of publication of application: **18.05.2011**
(21) Application number: 10188084.7
(22) Date of filing: 19.10.2010
(51) Int. Cl.: G06F 21/00

(54) **Computer and hardware identity tracking using characteristic parameter-derived data**

(30) Priority: 19.10.2009 US 252992 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A method for computer identity tracking may be implemented by executing software, for example, from a server, for generating a baseline machine fingerprint for a client device by reading data indicating current configuration states of hardware making up the client device and processing the data to generate the baseline machine fingerprint, storing the baseline machine fingerprint in a database of stored machine fingerprints, subsequently generating a working machine fingerprint for the client device, the working machine fingerprint derived from a portion of the data, the portion determined according to a sampling protocol, querying the database of stored machine fingerprints using the working machine fingerprint and the sampling protocol to determine whether the working machine fingerprint matches a machine fingerprint previously stored in the database, and providing an indication of results from querying the database.

## Description

This application claims priority to U.S. Provisional Application No. 61/252,992 which was filed October 19, 2009 and which is fully incorporated herein by reference.

### BACKGROUND

### 1. Field

The present disclosure relates to methods and systems for checking or tracking the identity of distributed computers and related hardware components.

### 2. Description of Related Art

Information concerning the identity of distributed computers and related hardware components is relevant to various applications, for example, securing remote online access to network, data, and other computer or communications resources, detecting and discouraging the counterfeiting of hardware, and tracking for technical support and marketing purposes. Serial numbers and similar assigned identifiers are sometimes used for hardware or software identification, but assigned identifiers are subject to misuse and copying, or may be lost over time. In addition, identifiers are not universally assigned to computers and related hardware components, and therefore may not be available in many circumstances.

It would be therefore desirable to provide systems and methods for checking or tracking the identity of hardware components that do not require the use of an assigned identifier.

### SUMMARY

The present technology uses digital hardware fingerprints to detect counterfeit hardware and track distribution and use of computing and communications hardware, without requiring a serial number or other assigned hardware identifier. These elements may be implemented at the client level, server level, or a mixture of client and server levels in various combinations, some examples of which are provided by the illustrative embodiments disclosed herein.

In some embodiments, hardware for which it is desired to discourage counterfeiting is fingerprinted at an entry control point to a distribution network. To "fingerprint" hardware, as used herein, refers to collecting characteristic data from a complex electronic hardware component, and processing the characteristic data to provide discrete data that is characteristic of the component; i.e., capable of being reproduced at a later time by re-analyzing the component. The hardware component typically includes at least one processor, and several ancillary devices in communication with the processor. An "entry control point" refers to any definite point (e.g., a post-manufacture event) in a supply chain where it is desired to begin tracking hardware configuration; for example, after the hardware component is manufactured and before it is packaged for shipment to the first distributor in the supply chain.

In other embodiments, fingerprinting is not performed at a definite entry control point for the hardware. Instead, fingerprinting is performed from time to time after the hardware is released to the field, in response to one or more defined events.

The hardware fingerprint may be obtained at the entry control point or in response to some defined event at any time, by communicating with the processor of the hardware component using an external computer, executing software or firmware installed on the hardware, or some combination of the foregoing, to read characteristic data pertaining to devices making up the hardware component. Characteristic data may include, for example, serial numbers, version numbers, dates, and other data from hardware, software or firmware installed on one or more hardware components, and system performance measures. The gathered data may be further processed to provide a data signature - i.e., the "fingerprint" - that is characteristic of the component and can be regenerated from the hardware component using a fingerprinting algorithm at a later time.

The fingerprint data collected may be stored using a data server or other data storage device capable of being accessed by a server that the hardware is designed to connect to via a communication network or networks. Each hardware fingerprint may be stored in association with metadata concerning the extracted fingerprint. For example, metadata may include the date and time when the fingerprint is generated, the network address of the fingerprinted device, the registered operator information, geographic location information, and a version identifier for installed software. The fingerprint and metadata may be stored in related fields of a database record or data table. Using this method, there is no need for a unique machine identifier, for example, a serial number, to be assigned to the hardware component from which the fingerprint was taken.

One or more predefined events may, from time to time, cause the hardware component to provide its machine fingerprint to a designated address. For example, a triggering event may be defined as the first time, each time, or first time in a defined period, that the hardware component connects to a designated network resource. The machine fingerprint should be freshly determined on the client component at a time relatively close to, or contemporaneously with, occurrence of the triggering event. In some embodiments, the client may execute a software or firmware algorithm to determine the machine fingerprint in response to the predefined sensor or clock signal indicating occurrence of the selected event. In the alternative, or in addition, the client may determine the machine fingerprint after accessing the designated network resource, in response to a server query requesting a machine fingerprint, or in response to some other event.

Each hardware component therefore from time to time provides a freshly generated machine fingerprint to the designated address. A server or other system component may be configured to obtain fingerprint data from numerous distributed hardware components according to a defined algorithm. In some embodiments, the server may transmit an application configured for generating the machine fingerprint to the client. The application may comprise one or more executable files, which may be configured to operate in cooperation with a corresponding application on the server, or in the alternative, to operate independently of the server.

According to the foregoing, the server therefore receives from time to time a freshly generated machine fingerprint, for each client machine in a population of numerous distributed clients. Once in possession of this data, the server compares the recently received fingerprint with stored fingerprint data to determine whether each client has a known fingerprint. For example a match between the stored fingerprint and the recently generated fingerprint can be interpreted as an indication that the client machine from which the fingerprint was obtained is the same machine from which one of the stored fingerprints was taken. Conversely, if a freshly generated fingerprint does not exactly match any other fingerprint in the database, this may be taken as an indication of corresponding client is unknown to the system, and trigger responsive action of some kind. Responsive action may consist of recording data for tracking purposes, or may include other activities such as, for example, preventing access by the client machine to support resources, or registering the machine fingerprint for use with a particular resource. The foregoing examples merely illustrate certain advantages of the technology described herein, and should not be construed as limiting the uses to which the technology may be applied.

A more complete understanding of the system and method for checking or tracking the identity of distributed computers and related hardware components will be afforded to those skilled in the art, as well as a realization of additional advantages and objects thereof, by a consideration of the following detailed description. Reference will be made to the appended sheets of drawings which will first be described briefly.

### BRIEF DESCRIPTION OF THE DRAWINGS

FIG. 1 is a block diagram showing one embodiment of a system according to the invention for tracking the identity of distributed computers and related hardware components.

FIG. 2 is a sequence diagram showing an example of a method according to the invention for tracking the identity of distributed computers and related hardware components.

FIG. 3 is a process flow chart showing one embodiment of a method according to the invention for tracking the identity of distributed computers and related hardware components.

FIG. 4 is a process flow chart showing an embodiment of a method according to the invention for obtaining a current fingerprint of a remote hardware component or device.

FIG. 5 is a process flow chart showing another embodiment of a method according to the invention for obtaining a current fingerprint of a remote hardware component or device.

FIG. 6 is a block diagram showing an example of client device and internal components for fingerprinting according to methods of the present invention.

Throughout the several figures and in the specification that follows, like element numerals are used to indicate like elements appearing in one or more of the figures.

### DETAILED DESCRIPTION

The present technology provides for tracking the identity of distributed computers and related hardware components, using hardware fingerprinting.

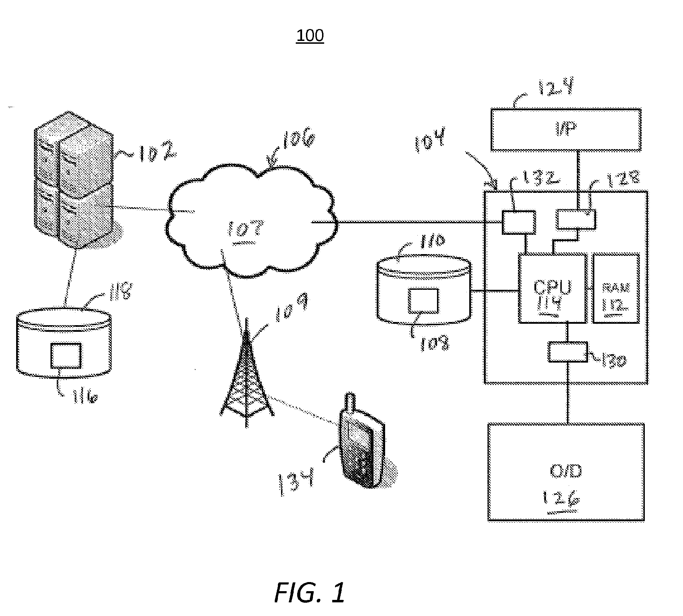

FIG. 1 shows a system 100 including a server 102 and client devices 104, 134 in communication via a communications network 106. Communications network 106 may comprise the Internet 107, a cellular communications network 109, a satellite communications network (not shown), a local area network (not shown), or some combination of these or other suitable networks. The client device may be configured with a software executable file or files 108 encoded in a computer-readable media of a data storage device 110. When loaded into the client memory 112 and subsequently into the client processor 114, the executable file or files causes the client device to perform the client-side processes and outputs as described in more detail herein. Examples of suitable devices for use as client device 104 include personal computers, network appliances, routers, programmable communications devices such as mobile telephones and media players, "netbooks," and other programmable devices.

Similarly, the server 102 may be configured with a server-side application file or files 116 encoded in a computer-readable media of a data storage device 118. When loaded into the server memory and subsequently into a processor of the server, the executable file or files causes the server to perform the server-side processes and outputs as described in more detail herein. File or files 108 and 116 may be developed by writing programming code in any suitable programming language to perform the actions and provide the outputs consistent with the disclosure herein, and compiling the code to provide machine-executable code. Like the client device 104, the server 102 may comprise any one of various suitable programmable computing devices. In the alternative, server 102 may comprise a coordinated assembly of such computing devices, for example, a server farm.

Generally, the clients 104, 134 may be configured as input-transforming machines, an essential purpose of which is to receive physical input from at least one client-side user input device 124 and provide a responsive physical output via a client-side output device 126, such as an audio-video output. Input device 124 may comprise various devices, for example, a keyboard, mouse, microphone, or other physical transducer connected to client 104 and configured to transform physical input from a user into a data signal, which may be routed through an interface device 128 and provided as input to processor 114. The processor 114, operating an executable program as described herein, responds to the input signal and provides output data through a video interface 130 to a display device 126. The processor 114 may further receive input data from the server 102 or provide output to the server via network interface 132 and communications network 106. Client 134 may include similar elements in a mobile form factor communicating wirelessly with network 106, for example, via a cellular communications network.

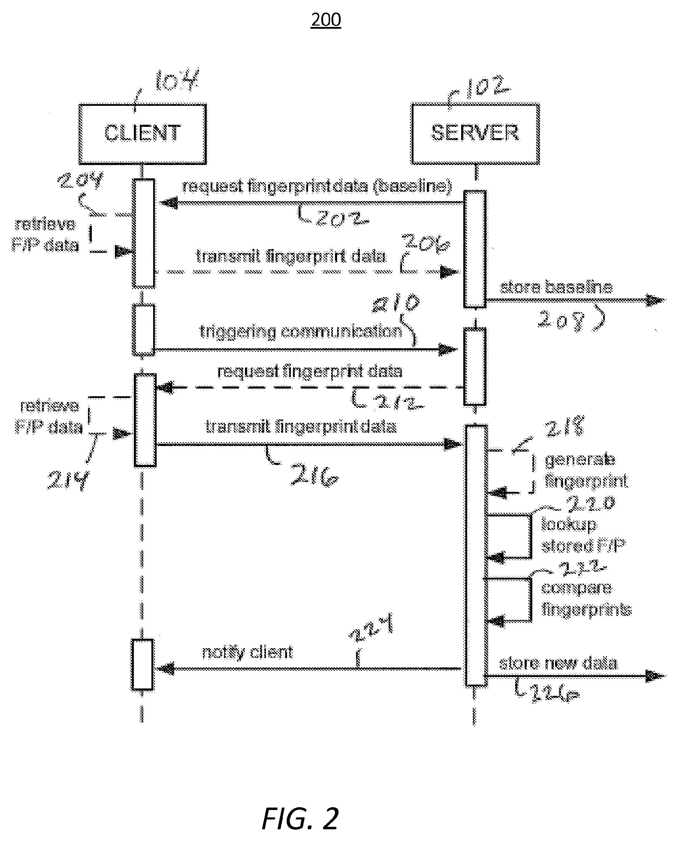

FIG. 2 is a sequence diagram that exemplifies an interactive process 200 such as may occur between a server 102 and client 104. The diagram shows an automated process in which user interaction is not required. The process 200 may be adapted to respond to input from one or more input devices as well.

Initially, a baseline hardware fingerprint is generated from the client hardware 104. In some embodiments, this may be implemented at an entry control point via a request 202 from another computer, e.g., server 102. The baseline fingerprint may be generated on the client using an application downloaded from the server 102, or installed on the client 102 by some other method. In the depicted embodiment, the server requests specific parameter or "fingerprint" data from the client, which responds by collecting the requested fingerprint data 204 using a data collection application. The client may transmit requested data from the server, which may use some or a selected portion of the provided data as input to a process generating a machine fingerprint. The server may store the resulting fingerprint 208 as baseline data in a database or similar data structure.

A subsequent identification process may be initiated 210 by any communication from the client device, for example a resource request. For further example, the communication may consist essential of a ping or "here I am" signal generated automatically when the client boots up or connects to a network. Whatever the form or timing of the communication signal, the server may be configured to respond 212 by requesting a current fingerprint, or data enabling generation of a current fingerprint, from the client device.

In response to the request 212, the client may execute an application for retrieving the requested fingerprint data 214 and transmit 216 the current fingerprint data to the server 102. Various methods and means for obtaining current fingerprint data are described later in the specification.

Optionally, the server may generate a current fingerprint 218 using the fingerprint data from the client as input. In the alternative, the client may generate the fingerprint (not shown) and transmit to the server. Either way, after obtaining the current fingerprint, the server queries a database 220 using the current fingerprint. The server or a database engine compares 222 the current fingerprint for client 104 with fingerprint records stored in the database. If the client configuration has not changed in any critical way since the baseline fingerprint was generated, the current fingerprint will match at least one baseline fingerprint in the database. Conversely, if the client configuration has changed, or if no baseline fingerprint was previously obtained and stored in the database for client 102, the current fingerprint should not match any record in the database. Either way, the database query result may be communicated to the client 224 and to any component 226 or resource having a use for the information. Such uses may include, for example, confirming machine identities and preventing unidentified machines from accessing secure data or other resources.

In addition, the server may determine the nature or quality of the configuration change based on a comparison between the current and baseline fingerprints. For example, the server may be able to determine, based on the comparison, that all parameters making up the fingerprint are unchanged except for one or a few specific parameters, and identify what the changed parameters are. For such applications, the server should be able to infer that the different current and baseline fingerprints are in fact from the same machine, such as by using a separate machine identifier, comparing other machine parameters, or by close similarities between the fingerprints.

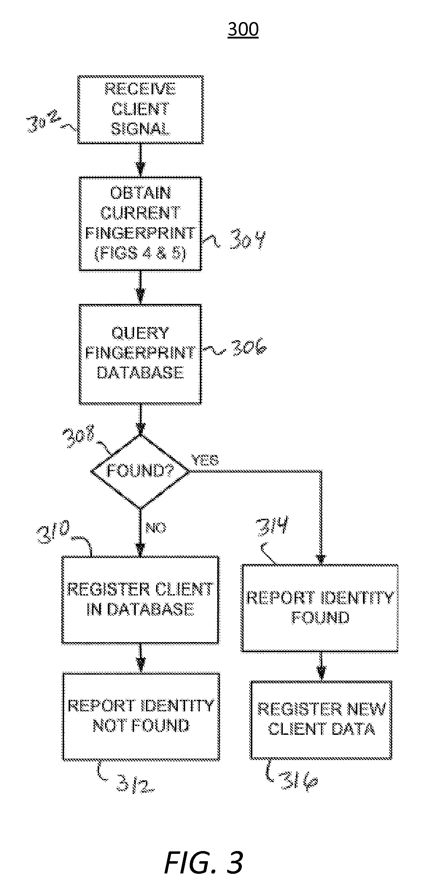

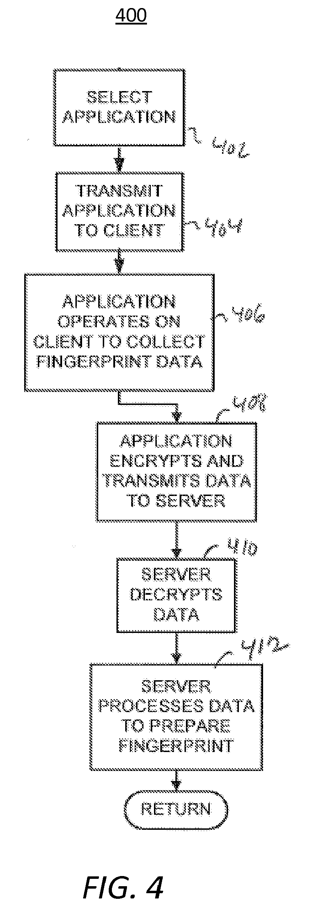

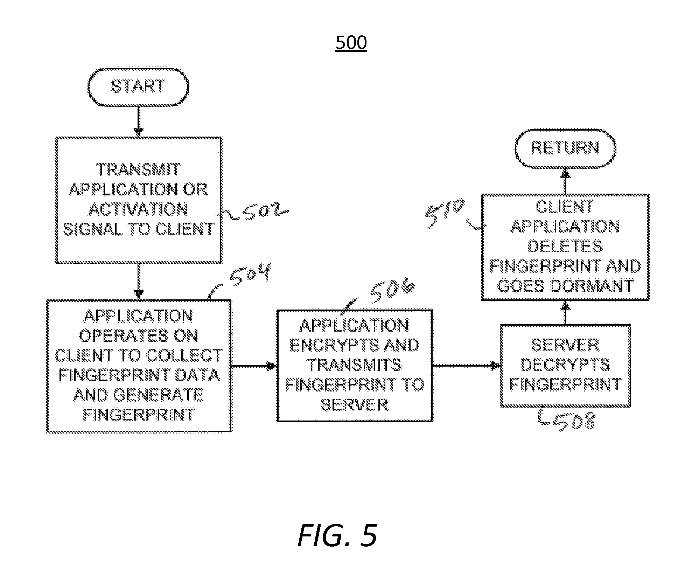

In accordance with the foregoing, FIG. 3 shows an example of a method 300 for tracking and confirming identities of hardware devices. A server receives the predetermined initiating signal from a client at 302. This triggers a process 304 described more fully in connection with FIGS. 4 or 5, in which the server obtains a current fingerprint from the client machine. For example, the initiating signal received at 302 may include the current machine fingerprint generated automatically on the client just prior to the communication. However, in the embodiments primarily disclosed herein, the current fingerprint is obtained using a later process responsive to the initial communication from the client. The client machine need not provide an identifier in addition to the machine fingerprint. Therefore, method 300 is useful for client devices to which no identifier has been assigned, or in situations where assigned identification data has been lost.

At 306, the server may query a database of fingerprints using a current fingerprint obtained from process 304. If no match for the current fingerprint is found in the database 308, the server may register the current fingerprint in the database as a new record 310. Optionally, the current fingerprint may be saved in association with other parameter data relating to the machine, including, for example, a date, time, geographic location and network address for the client machine. In addition, the server may provide a signal 312 to any other component or process indicating that the current fingerprint was not found in the fingerprints database. The signal may operate to flag the client as suspect for further investigation, temporarily or permanently bar the client from access to a designated resource or component, be used merely for tracking purposes, or for any other use.

If the server finds a match for the current fingerprint in the database 308, the server may provide a signal 314 to any other component or process indicating that the current fingerprint was found in the fingerprints database. The signal may operate to identify the client as previously registered, temporarily or permanently grant the client access to a designated resource or component, be used merely for tracking purposes, or for any other use. In addition, the server may update the fingerprint database 316 with new parameter data relating to the current fingerprint. For example other parameter data relating to the machine, including, for example, a date, time, geographic location and network address for the client machine at the time the current fingerprint was obtained may be added to a record for the fingerprint. This data may be useful for tracking use and configuration of the client machine through time.

FIGS. 4 and 5 are flow charts showing examples of methods 400, 500 for obtaining a current fingerprint of a remote hardware component or device. The present technology is not limited by these examples. In some embodiments as shown in FIG. 4, the server may select an application 402 configured to compute a machine fingerprint for the particular type of client indicated by the client signal received at 302. The server may be configured to authenticate various different types of hardware and may therefore be configured with different fingerprint-generating applications. Once selected, the server may transmit the application to the client 404.

The application may be configured to operate automatically on the client 406 to collect fingerprint data. Specific examples of fingerprint data are provided later in the specification. Data may be collected for critical components of the client. The application may also gather data for non-critical components to obscure the critical data. During or after collecting the fingerprint data for which it is programmed, the application may encrypt the data and transmit it to the server 408. The server decrypts the data 410 and processes it to prepare the fingerprint 412. Examples of such processing are described later in the specification. The processing may include, for example, discarding data collected for non-critical components, organizing the collected data, truncation, and/or applying a hash and/or other data transformation.

According to an alternative embodiment 500 as shown in FIG. 5, a fingerprint-generating application operates on the client to prepare the current fingerprint. The application may be transmitted to the client by the server 502, or be pre-installed on the client and activated by the server. The application operates on the client to collect fingerprint data and generate a current fingerprint 504. After generating the fingerprint, the application may encrypt the current fingerprint and transmit to the server 506. The server may decrypt the fingerprint 508 for use in method 300. Subsequently the client application may delete the current fingerprint from all system memory locations and go dormant 510. To "go dormant" here refers to inactivating itself, which may merely involve termination but in more sophisticated embodiments may also include locking or inactivating itself after termination. For example, as part of a termination procedure the application may delete a key required to execute the application from all client memory locations. After the key deletion, the application cannot be executed until the key is supplied from another source, such as from the authorized server. The client application discussed in FIG. 4 may similarly inactivate itself after generating the current key.

In both methods 400 and 500, to generate the fingerprint data the client device under control of the fingerprint application first reads local system component parameter information according to a predefined algorithm to generate a data file. The parameters checked to generate the fingerprint may include, for example, hard disk volume name, computer name, hard disc initialization date, amount of installed memory, type of processor, software or operating system serial number, or unique parameters associated with firmware installed in the client device. In some embodiments, the parameter information may also include system performance measurements; for example, the time or number of computing cycles required to complete a benchmarking task. In general, the collected parameter information should be of a time-stable or static nature for the client, meaning that it should not change except in response to changes in the machine configuration, and used as input to an algorithm for generating a specific data file. The resulting data file, also referred to herein as "fingerprint data," may be stored in a file in a memory of the client. Fingerprint data is described more detail below, and signifies data that is characteristic of hardware or firmware belonging to the client device, collected and assembled to have a very high probability (e.g., greater than 99.999%) of being unique to the client. It may be advantageous to store the fingerprint file in a transient file only, such as in a random-access memory (RAM) device, so that no record of the file remains after the fingerprint is generated. The stored data file comprises parameter data arranged in a defined order of data fields or records. Each data field may be of a known length, which may vary for each field. The fingerprint data file may be encrypted, secured or obfuscated using any suitable method. The client may transmit the entire fingerprint data file to a trusted server after it is first generated.

In the alternative, the client may transmit only a selected portion of the fingerprint data to the server. In such alternative cases, the client may request information from a trusted source for defining a sampling protocol, i.e., a data template, for deriving a portion from the fingerprint data to generate a machine fingerprint. The sample-defining template may comprise information defining a filter or other transformation to be applied to the original fingerprint data file to generate a device fingerprint. In some embodiments, the template defines a map for selecting designated portions of the fingerprint data file. For example, the template may specify one or more bytes of data, but less than all data, be selected from each data field in a particular order or position. In these embodiments, the client may process the fingerprint data using the sample-defining template to generate a resulting working machine fingerprint, which may be stored in a local buffering system as a temporary fingerprint. The client, the source of the sample-defining template, or both may store the sample-defining information in a secure file for future reference, optionally first encrypting it. The client may then provide the working machine fingerprint to the server or any other device that needs the fingerprint to identify or authenticate the client device.

A response or query provided by the client device to the server may include both the working machine fingerprint and the sampling protocol. Alternatively, the sampling protocol may be provided independently to both the client device and the server by a third party source. During authentication, the authenticating server applies the sampling protocol to one or many stored machine fingerprints to derive a corresponding one or many temporary fingerprints, each of which may be used in succession in a comparison to the working machine fingerprint derived from the client device. In one embodiment, the temporary fingerprints may be derived and compared to the working machine fingerprint one at a time. When a mismatch is determined from a comparison of the working machine fingerprint to the first-generated temporary fingerprint, a second temporary fingerprint would then be generated and similarly compared as a potential match. This trial-and-error method would continue sequentially until a match is determined or until all trials are conducted. Where no match is found after exhausting all possible comparisons, an indication that the client device is unrecognized, or unauthorized, may be provided to the client device or to another source. Alternatively, many or all of the stored machine fingerprints may be transformed into corresponding temporary fingerprints using the sampling protocol prior to making any comparisons to a working machine fingerprint. Either way, the use of the sampling protocol according to the invention may advantageously save considerable processing time.

In some embodiments, a trusted server, which may be a third-party server, maintains a record of the entire fingerprint data for the client, while the sample-defining template used to generate a working machine fingerprint is discarded after each use. The server may generate the sample-defining template and confirm that the machine fingerprint generated by the client is consistent with both the fingerprint data and with the sample-defining template. By specifying different sample-defining templates at different times, the server may thereby authenticate the client without requiring the client to transmit the entirety of the fingerprint data for each authentication instance. Instead, the entire fingerprint data may provided from the client to the server during a single initialization session, which may be initiated and secured by the server using appropriate security tools, if it is transmitted at all. Subsequent sessions need not be as secure because the entirety of the fingerprint data is not retransmitted. The utility of the client's machine fingerprint for authentication of device identity may be thereby maintained in a more secure form.

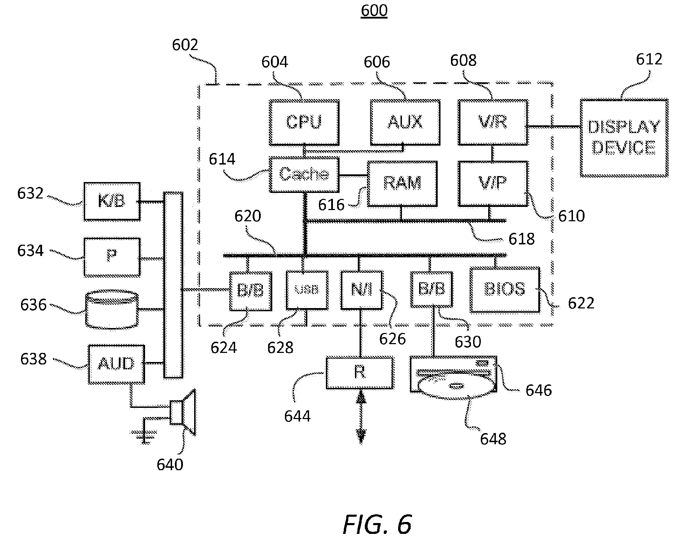

An example of a client device 600 comprising multiple components that may provide input for a machine fingerprint is shown in FIG. 6. Client 600 is depicted by way of example only, and does not limit the configuration of a client device on which hardware fingerprinting may usefully be performed. Client 600 may comprise a motherboard 602 on which reside a CPU 604 and one or more auxiliary processors 606. The CPU may comprise a cache memory 614 in communication with a random access memory (RAM) 616. A video processor 610 may communicate with these components via Northbridge hub 618 and provide video data through video RAM 608 to a display device 612.

Other components may communicate with the CPU 604 via a Southbridge hub 620, such as, for example a BIOS read-only memory or flash memory device 622, one or more bus bridges 624, 630, a network interface device 626, and a serial port 628. Each of these and other components may be characterized by some data or parameter settings that may be collected using the CPU 604 and used to characterize the client device 600. In addition, the client may be connected to various peripheral devices. For example, client 600 may be connected to a keyboard 632, a pointing device 634, a data storage device 636, and an audio output device 638 for transforming a data signal into analog audio output for a speaker 640 or amplifier (not shown). Other peripheral devices may include a router 644 connected via network interface 626 and providing connectivity to the Internet or other network, which may comprise a means for receiving applications or data from a server, or communicating with a server. Some clients may also include a media reader 646 for portable media 648, which may comprise a means for receiving an application capable of performing methods and processes disclosed herein.

Although client device 600 is shown with components as may often be found in personal computers, the technology disclosed herein may readily be implemented on more clients of other types having programmable processors, memories and means for communicating with a server, and generally having components with non-user-configurable settings that may be used in compiling a device fingerprint. Examples of integrated portable clients include network appliances, routers, servers, application-capable mobile phones, media player devices, personal organizers, and netbooks.

Illustrative examples of various machine parameters that may be accessible to an application or applications running on or interacting with a processor of the client machine to generate fingerprint data may include, for example: machine model; machine serial number; machine copyright; machine ROM version; machine bus speed; machine details; machine manufacturer; machine ROM release date; machine ROM size; machine UUID; and machine service tag. For further example, these machine parameters may include: CPU ID; CPU model; CPU details; CPU actual speed; CPU family; CPU manufacturer; CPU voltage; and CPU external clock; memory model; memory slots; memory total; and memory details; video card or component model; video card or component details; display model; display details; audio model; and audio details; network model; network address; Bluetooth address; hard disk drive model identifier; hard disk drive serial identifier; hard disk drive configuration details; hard disk drive damage map; hard disk drive volume name; NetStore details; and NetStore volume name; optical drive model; optical drive serial; optical details; keyboard model; keyboard details; mouse model; mouse details; printer details; and scanner details; baseboard manufacturer; baseboard product name; baseboard version; baseboard serial number; and baseboard asset tag; chassis manufacturer; chassis type; chassis version; and chassis serial number; IDE controller; SATA controller; RAID controller; and SCSI controller; port connector designator; port connector type; port connector port type; and system slot type; cache level; cache size; cache max size; cache SRAM type; and cache error correction type; fan; PCMCIA; modem; portable battery; tape drive; USB controller; and USB hub; device model; device model IMEI; device model IMSI; and device model LCD; wireless 802.11; webcam; game controller; silicone serial; and PCI controller; machine model, processor model, processor details, processor speed, memory model, memory total, network model of each Ethernet interface, network MAC address of each Ethernet interface, hard disk drive model identifier, hard disk drive serial identifier (e.g., using Dallas Silicone Serial DS-2401 chipset or the like), OS install date, nonce value, amount of time or number of computing cycles required to complete a benchmarking process, and nonce time of day. The foregoing examples are merely illustrative, and any suitable machine parameters may be used.

Because many client devices are mass-produced, using hardware parameters limited to the client box may not always provide the desired level of assurance that a fingerprint is unique to the client device. Use of user-configurable parameters may ameliorate this risk considerably, but increase the risk that the fingerprint may change over time. In addition, sampling of physical, non-user configurable properties for use as parameter input may also lessen the risk of generating duplicate fingerprint data. Physical device parameters available for sampling may include, for example, unique manufacturer characteristics, carbon and silicone degradation and small device failures.

Measuring carbon and silicone degradation may be accomplished, for example, by measuring a processor chip's performance in processing complex mathematical computations, or its speed in response to intensive time variable computations. These measurements depend in part on the speed with which electricity travels through the semi-conductor material from which the processor is fabricated. Using variable offsets to compensate for factors such as heat and additional stresses placed on a chip during the sampling process may allow measurements at different times to reproduce the expected values within a designated degree of precision. Over the lifetime of the processor, however, such measurements may change due to gradual degradation of the semi-conductor material. Recalibration or rewriting the fingerprint data may be used to compensate for such changes.

In addition to the chip benchmarking and degradation measurements, the process for generating a fingerprint data may include measuring physical, non-user-configurable characteristics of disk drives and solid state memory devices. For example, each data storage device may have damaged or unusable data sectors that are specific to each physical unit. A damaged or unusable sector generally remains so, and therefore a map of damaged sectors at a particular point in time may be used to identify a specific hardware device later in time. Data of this nature may also be included in a fingerprint file.

The fingerprint-generating application may read parameters from operating system data files or other data stored on the client, or actively obtain the parameters by querying one of more hardware components in communication with a processor on which the application is operating. A client processor provided with at least one application operating to gather the machine parameters may comprise a means for collecting and generating fingerprint data.

This process of generating a working machine fingerprint may include at least one irreversible transformation, such as, for example, a cryptographic hash function, such that the input machine parameters cannot be derived from the resulting fingerprint data. Each fingerprint data, to a very high degree of certainty, cannot be generated except by the suitably configured application operating or otherwise having had access to the same computing device for which the fingerprint data was first generated. Conversely, each fingerprint, again to a very high degree of certainty, can be successfully reproduced by the suitably configured application operating or otherwise having access to the same computing device on which the identifier was first generated.

Optionally, the client device may store the fingerprint in a local memory. However, in some embodiments the fingerprint is stored by the client device only temporarily to facilitate transmission to a server for use in the authentication process described herein. This approach may lessen the risk of the fingerprint data being discovered and used for an unauthorized purpose. In the alternative, or in addition, the client may transmit only a portion of the fingerprint data to the server, or transmit additional data with the fingerprint data used to generate a machine fingerprint. Either method may reduce the risk that fingerprint data will be somehow intercepted during or after transmission, and used for some unauthorized purpose.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein is an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented, unless a specific order is expressly described or is logically required.

Moreover, various aspects or features described herein can be implemented as a method, apparatus, or article of manufacture using standard programming and/or engineering techniques. The term "article of manufacture" as used herein is intended to encompass a computer program accessible from any computer-readable device or media. For example, computer-readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., Erasable Programmable Read Only Memory (EPROM), card, stick, key drive, etc.). Additionally, various storage media described herein can represent one or more devices and/or other computer-readable media for storing information. The term "computer-readable medium" may include, without being limited to, optical, magnetic, electronic, electro-magnetic and various other tangible media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method for computer identity tracking, comprising:
generating a baseline machine fingerprint for a client device having a processor and memory, at least in part by reading data indicating current configuration states of hardware making up the client device and processing the data to generate the baseline machine fingerprint;
storing the baseline machine fingerprint in a database of stored machine fingerprints;
generating, subsequently, a working machine fingerprint for the client device, the working machine fingerprint derived from a portion of the data, the portion determined according to a sampling protocol;
querying the database of stored machine fingerprints using the working machine fingerprint and the sampling protocol to determine whether the working machine fingerprint matches a machine fingerprint previously stored in the database; and
providing an indication of results from querying the database.

2. The method of claim 1 wherein the querying step further comprises applying the sampling protocol to a stored machine fingerprint to generate a temporary fingerprint for comparison as a potential match to the working machine fingerprint.

3. The method of claim 2 further comprising, where the comparison yields no match, generating additional temporary fingerprints from the remaining stored machine fingerprints and comparing each temporary fingerprint, in succession, to the working machine fingerprint until a match is found or until all temporary fingerprints yield no match.

4. The method of claim 1 wherein the sampling protocol comprises a data filter specifying selection of designated portions of the baseline machine fingerprint for inclusion in the working machine fingerprint.

5. The method of claim 1 wherein the sampling protocol changes each time a working machine fingerprint is generated for the client device.

6. The method of claim 1 wherein the sampling protocol is provided to the client device from a remote source.

7. The method of claim 1 performed by a server in remote communication with the client device.

8. The method of claim 7, further comprising retrieving, using the server, raw configuration data from the client device for use in generating the baseline machine fingerprint.

9. The method of claim 8, further comprising transmitting an application from the server to the client, the application configured for retrieving the raw configuration data.

10. The method of claim 1 performed by a server remote from the client device, wherein the sampling protocol is provided to the client device from a trusted source remote from the server and the client device.

11. The method of claim 1, further comprising registering, in the database of stored machine fingerprints, the baseline machine fingerprint in association with current parameter information for the client device.

12. A method for computer identity tracking, comprising:
generating a baseline machine fingerprint for a hardware component using an algorithm, the algorithm processing characteristic configuration data determined from the hardware component as input, wherein the baseline machine fingerprint is capable of being generated from the hardware component so long as the characteristic configuration data of the hardware component is unchanged;
transmitting the baseline machine fingerprint for storage in a computer-readable data structure;
generating, subsequently, a working machine fingerprint for the hardware component, the working machine fingerprint derived from a portion of the characteristic configuration data, the portion determined according to a sampling protocol; and
generating a data signal, in response to a query comprising the working machine fingerprint and the sampling protocol received at a time after the baseline machine fingerprint was generated, indicating whether the working machine fingerprint matches the baseline fingerprint stored in the computer-readable data structure.

13. The method of claim 12 further comprising, in response to receiving the query, applying the sampling protocol to the stored baseline machine fingerprint to generate a temporary fingerprint for comparison as a potential match to the working machine fingerprint.

14. The method of claim 12 wherein the sampling protocol comprises a data filter specifying selection of designated portions of the baseline machine fingerprint for inclusion in the working machine fingerprint.

15. The method of claim 12 wherein the sampling protocol changes each time a working machine fingerprint is generated for the client device.
